# EUROPEAN PATENT SPECIFICATION

(11) **EP 2 110 999 B1**
(45) Date of publication and mention of the grant of the patent: **12.12.2012**
(21) Application number: 08154578.2
(22) Date of filing: 15.04.2008
(51) Int. Cl.: H04L 12/56, H04W 40/32

(54) **Method and apparatus for forwarding data in a wireless network**
Verfahren und Vorrichtung zur Weiterleitung von Daten in einem drahtlosen Kommunikationsnetzwerk
Procédé et appareil pour le transfert de données dans un réseau sans fil

(43) Date of publication of application: 21.10.2009
(73) Proprietor: NTT DoCoMo, Inc., Tokyo (JP)
(72) Inventor: Loyola, Luis, 80539, Munich (DE); Aad, Imad, 80689, Munich (DE); Widmer, Joerg, 81539, Munich (DE)
(74) Representative: Betten & Resch

(56) References cited:
- US-A1- 2008 085 677
- YONGCAI WANG ET AL: "Energy-driven adaptive clustering data collection protocol in wireless sensor networks" INTELLIGENT MECHATRONICS AND AUTOMATION, 2004. PROCEEDINGS. 2004 INTER NATIONAL CONFERENCE ON CHENGDU, CHINA AUG. 26-31, 2004, PISCATAWAY, NJ, USA,IEEE, 26 August 2004 (2004-08-26), pages 599-604, XP010764711 ISBN: 978-0-7803-8748-5
- LIANG ZHAO ET AL: "Energy-efficient self-organization for wireless sensor networks: a fully distributed approach" GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, vol. 5, 29 November 2004 (2004-11-29), pages 2728-2732, XP010758232 ISBN: 978-0-7803-8794-2
- KI-IL KIM: "Exploring Performance of Hypercube Structure for Multicast in Mobile Ad Hoc Networks" WIRELESS PERSONAL COMMUNICATIONS, KLUWER ACADEMIC PUBLISHERS, DO, vol. 43, no. 4, 11 July 2007 (2007-07-11), pages 1633-1651, XP019558039 ISSN: 1572-834X

## Description

### FIELD OF INVENTION

The present invention relates to a method and an apparatus for forwarding data in a wireless network

### BACKGROUND OF THE INVENTION

Technologies that support the transmission of multicast data in current wireless networks are becoming more and more necessary with the arising of new multicast video services. Some of the solutions for this purpose focus on relay base stations which amplify and forward the incoming signal. One disadvantage of this solution is that, although these special relay nodes are not as expensive as a base station, their cost is still considerable. Another disadvantage of this solution is that the relay nodes are deployed in fixed locations with fixed settings and thus they can not adapt to dynamic network topologies, channel variations or user preferences. In networks with specific contention-based access mechanisms such as CSMA/CA multicast is poorly supported and most of the proposed solutions to improve the multicast transmission technology are too much dependant on feedback or acknowledgement coming from the terminals. In some proposed solutions the acknowledgement frames are sent by a set of representative or cluster-leader terminals to the AP.

In the following some examples of the background art will be explained.

The first example is the conventional Multicast Solution in 802.11. In the standard multicast solution for IEEE 802.11 WLANs stations that want to receive multicast frames must subscribe to a particular multicast group address. Each of the destination stations subscribed to said multicast group address can receive the frame but they do not respond with acknowledgements As a result, multicast does not ensure a complete, reliable flow of data to all stations subscribed to a particular group address. Generally speaking, if the multicast data rate of the access point (AP) in an infrastructure WLAN could be set to a high value, the stations subscribed to that group address, which are close to the AP would have a good reception while the ones that are far from the AP may not receive anything at all. In the other extreme, if the data rate at the AP for multicast frames is set to the minimum value (as specified in the standard 802.11), the system would be extremely inefficient as, for example, all stations which are close to the AP could be smoothly receiving the multicast frames at much higher data rate. If, for example, the number of stations close to the AP is large in comparison with the number of stations that are far from the AP, the above-mentioned inefficiency becomes even worse.

In summary, the legacy multicast solution for 802.11 is an open-loop system, so it is not possible to retransmit lost packets or select the best physical-layer data rate according to the channel conditions to the receiver nodes.

The lack of acknowledgments with multicasting in 802.11 means that some of the data that the application sends may not make it to all of the destinations, and there is no indication of a successful reception. This may be not a problem at all, though, for some applications, especially ones where it is fine to have gaps in data. For instance, the continuous streaming of pressure information from a monitor system in a power plant can occasionally miss status updates without causing any trouble There are other real-time applications, however, where the packet errors can significantly reduce the quality perceived by the user, like voice and video.

In another example, I. Hammerstrom, M.Kuh and A.Wittneben, "Distributed MIMO for Cellular Networks with Multihop Transmission Protocols", Asilomar Conference on Signals, Systems, and Computers 2006, Pacific Grove, CA, Oct. 2006, shows a theoretical analysis of two-hop transmission protocols with fixed infrastructure relay stations The model assumed is very simple: it has only 2 relay stations and one mobile station. Comparing different relay mechanisms in terms of average rate (bit/sec/Hz) it concludes that in the first hop the use of MIMO broadcast coding techniques, where the base station transmits only a subset of the data which is intended for the mobile station to each relay, has a superior performance compared to a MIMO multicast, where the whole data is transmitted to both relays.

In a further example, A. Boal, A.Soares and A. Correia, "Distributed Antenna Cellular System for Transmission of Broadcast/Multicast Services", Vehicular Technology Conference, 2007. VTC2007-Spring, IEEE 65th. studies the use of distributed antennas for multicast transmissions in 3G WCDMA systems. For that purpose a large number of antennas are distributed in the coverage area and its performance is compared to that of conventional macro-cell systems. The proposed system is considered as a candidate for MBMS (Multimedia Broadcast Multicast Service) that enable operators to deliver rich multimedia to a huge number of subscribers by broadcasting over the radio frequencies assigned to WCDMA The conclusion of the study is that the use of distributed antennas support higher data rates and provides larger coverage than the current macro-cell architecture. It also offers uniform distribution of capacity and reduces the dependence on the centralized control.

US Patent Application US020080085677A1 discloses a wireless communication device. The wireless communication device may include a first station and a second station. The first station is coupled with the second station. The first and second stations are within a first cluster. The stations within the first cluster are configured to operate cooperatively to transmit or receive signals corresponding to the cluster over at least one channel. One of the stations transmits only data signals without transmitting a preamble or a MAP message.

### SUMMARY OF THE INVENTION

The present invention is defined in the independent claims, and the dependent claims define particular embodiments of the invention.

According to one embodiment there is provided a method for forwarding data in a wireless network, wherein said network comprises one or more relay clusters, each relay cluster being formed by a group of nodes of said wireless network, said method comprising:
forwarding the data received by the nodes of one said relay clusters of said wireless network in a synchronized manner by simultaneously forwarding the received data within after it has been received by said group of nodes so that the nodes of a relay cluster collectively and simultaneously act as a relay node for received data

The simultaneous and collective transmission by the nodes of a relay cluster can increase the coverage of the base station or the access point from which the signals are to be relayed. By collective action the nodes act like a single relay node.

Said wireless network comprises multiple relay clusters, wherein said forwarding of data is performed in multiple consecutive relay phases, each relay phase having assigned a corresponding group of one or more relay clusters which forwards the data which it has received in during the preceding relay phase from the relay clusters assigned to the preceding relay phase.

The multiple relay phases with corresponding groups of clusters implements a layered architecture which further extends the coverage and the efficiency of the signal transmission.

The method for selecting the member nodes of a relay cluster for forwarding a signal comprises
selecting a cluster head for said relay cluster;
selecting those nodes as member nodes of said relay cluster for which the signal strength of a signal received from said cluster head lies beyond a certain threshold.

The method can implement the cluster formation in a manner which avoids negative interference between the different nodes of a cluster by ensuring a maximum distance from the cluster head.

For example one may infer a good reception quality from either the previous relay phase or the AP transmission by a high-enough signal strength at the receiver (which in a simple outdoor propagation scenario corresponds to a short-enough distance). Thus, while throughout the following the term "distance" may be used assuming such simple outdoor scenario, this should not be interpreting as limiting the applicability of the proposed mechanism.

The selection of the nodes of a further relay cluster comprises:
selecting a cluster head for said further relay cluster, wherein only such nodes are considered as a candidate for said cluster head for which the signal strength of a signal received from other clusters already existing lies below a certain threshold; and
after said cluster head has been selected, selecting those nodes as member nodes of said relay cluster for which the signal strength of a signal received from said cluster head lies beyond a certain threshold.

This achieves an efficient distribution of the clusters by ensuring a minimum distance between the different clusters

Multiple groups of clusters are generated, each group of clusters belonging to a corresponding relay phase within which all clusters belonging to said relay phase transmit simultaneously to forward the signal, wherein the members of the clusters of one group of clusters are selected based on the following conditions:
their cluster head receives a signal of the preceding relay phase or from the zero-th relay phase at a strength beyond a certain threshold; and/or
the cluster heads of the different clusters have a minimum distance from each other which is ensured by selecting them such that the signal strength of a signal which they receive from other existing clusters lies below a certain threshold; and/or the member nodes of a cluster receive a signal from their corresponding cluster head at a signal strength beyond a certain threshold.

The minimum signal strength for the cluster head ensures a maximum distance (i.e. good reception quality) from the base station or from the preceding relay phase According to one embodiment the signal strength received by the cluster head from the zero- th relay phase further needs to be lower than the signal strength received by a the cluster head of a preceding relay phase from the zero-th relay phase

The maximum signal strength between clusters ensures a minimum distance between them

The minimum signal strength for cluster members ensures that the members of a cluster are not too distant from each other

According to one embodiment the method further comprises: introducing an artificial delay between two simultaneous transmissions of the same relay phase.

This ensures the ability to decode signals even if the receiving node lies between two clusters.

According to one embodiment there is provided an apparatus for forwarding data in a wireless network, wherein said network comprises one or more relay clusters, each relay cluster being formed by a group of nodes of said wireless network, said apparatus comprising:
a module for forwarding the data received by the nodes of one said relay clusters of said wireless network in a synchronized manner by simultaneously forwarding the received data within after it has been received by said group of nodes so that the nodes of a relay cluster collectively and simultaneously act as relay nodes for received data.

Said wireless network comprises multiple relay clusters, wherein said forwarding of data is performed in multiple consecutive relay phases, each relay phase having assigned a corresponding group of one or more relay clusters which forwards the data which it has received in during the preceding relay phase from the relay clusters assigned to the preceding relay phase.

The apparatus for selecting the member nodes of a relay cluster comprises
a module for selecting a cluster head for said relay cluster;
a module for selecting those nodes as member nodes of said relay cluster for which the signal strength of a signal received from said cluster head lies beyond a certain threshold.

According to one embodiment said apparatus further comprises:
a module for carrying out a method according to one of the embodiments of the invention.

According to one embodiment there is provided a computer program comprising computer program code which when being executed by a computer enables said computer to carry out a method according to one of the embodiments of the invention.

### DESCRIPTION OF THE DRAWINGS

Fig. 1 schematically illustrates a coverage vs. data rate curve.
Fig. 2 schematically illustrates an embodiment of the present invention
Fig. 3 schematically illustrates the reception signals in an embodiment of the present invention

### DETAILED DESCRIPTION

In the following embodiments of the invention will be described.

At first, however, some terms used in the following description will be explained.
- SNR: : Signal to Noise Ratio
- CRC: : Cyclic Redundancy Check
- ACK: Acknowledgement Frame
- RTS: : Request-to-Send Frame defined by IEEE 802.11
- CTS: Clear-to-Send Frame defined by IEEE 802.11
- CSMA/CA :: Carrier-Sense Multiple Access with Collision Avoidance

- AP: : AP
- MIMO: : Multiple Input Multiple Output
- MAC: Medium Access Control
- AP: Access Point
- RSSI: : Received Signal Strength Indicator
- SIFS: : Short Inter-Frame Space defined by IEEE 802.11
- PHY: Physical Layer

According to one embodiment there are formed one or more clusters of nodes in a wireless network, each cluster acting as a virtual single relay node by the fact that the multiple nodes forming the cluster simultaneously forward the received signal.

In one embodiment there is provided a completely distributed scheme which forms cooperative relay clusters that transmit simultaneously multicast data frames originally transmitted by the AP or base station. The cooperative relay clusters behave as a distributed MIMO system which helps nodes with low-quality links from/to the base station to decode the multicast packets with no need of incurring into large feedback overhead from particular nodes to the AP - as in most of alternative solutions proposed for multicast services. Relying on nodes' cooperation for relaying packets, the mechanism substantially increases the probability of successful reception of frames, reduces the number of hops to cover a given area boosting the overall throughput of the network. To make such a system operational in 802.11 only few extensions to the medium access (MAC) control layer are required. An example of these extensions is mentioned below:
- During the estimation phase and the relay cluster-forming phase all nodes should operate in a promiscuous mode so that they are able to overhear transmissions from all other nodes
- The maximum number of clusters formed during the *m*th phase is decided by the AP and denoted *N_m.* The parameter *N_m* is either previously set in every node or informed by the AP through the beacon. In case of the latter method, the conventional 802.11 beacon should be changed.
- After the first cluster head of the *m*th relay phase has been self-selected the AP broadcasts a special acknowledgment packet containing the MAC address of the first cluster head, announcing that a first cluster-head has been chosen and there is a maximum of N_m - 1 remaining cluster heads for the *m*th relay phase transmissions.
- After the clusters of the *m*th relay phase are selected, the AP sends a message announcing the start of the *(m+1)*th-phase cluster selection with a maximum of N_(m+1) cluster heads - in general N_(m+1) is larger than N_m. The special message from the AP announcing the end of a phase and the beginning of the next phase (if any) would be an extension of 802.11.
- To deal with the hidden cluster problem an artificial delay Δ as small as few microseconds along with a signal estimation (equalizer training) phase may be introduced between two consecutive relay transmissions in the same relay phase. This delay also would represent an extension to 802.11.

Embodiments of the invention can be applied to any kind of wireless network, and they can be applied to multicast transmission and to broadcast transmission. Some examples which are given in the following relate to IEEE 802.11 technology but the skilled person will understand that the principles may also be applied to other types of networks or in general to any kind of wireless networks.

According to one embodiment there is created cluster of nodes that perform prompt or immediate and simultaneous relay of multicast packets in a cooperative and coordinated way. The clusters of nodes behave like *virtual APs* as the total received power from one cluster may be comparable to the received power from the AP. The formation of the cooperative clusters and the coordination of their transmissions in one embodiment proceed in four consecutive phases:
i) *Estimation*: every node assesses the channel state of the link between itself and other terminals
*ii) Selection of data rate*: the AP selects a proper data rate, which in principle is replicated in the subsequent relay transmissions
iii) *Selection of cluster heads*: nodes perform a self-selection algorithm to select the head nodes of relay clusters
iv) *Multicast relay operation*: opportunistic selection of relay nodes inside clusters formed in phase iii). This phase can be done simultaneously with phase iii)

Embodiments of the invention have the following advantages in comparison to the state of the art:
1. It extends considerably the coverage area of wireless networks for multicast or broadcast
2. It is able to considerably reduce or even to get rid of acknowledgment frames and other types of feedback for multicast transmissions
3. When fixing the network area size it increases the end-to-end data rate perceived by users
4. When applied to 802.11, it can be implemented with only few extensions to the standard

The mechanism according to one embodiment will now be described in somewhat more detail where it involves the following network elements and assumptions:
1) An AP or base station *Node-B* which transmits multicast data frames to a number of terminals subscribed to *M* multicast groups
2) *N* terminals associated with the AP and subscribed to *M* multicast groups For simplicity it is assumed that a terminal can be subscribed to only one multicast group
3) All nodes in the network make use of adaptive rate selection which changes the data rate according to the existing channel conditions
4) The *N* terminals are spread randomly and homogeneously within the area covered by *Node-B*
5) In principle we assume that the cluster-head nodes stay in a fixed position and the mobility level of general nodes in each cluster is moderate

It should be noted that these are not absolute requirements for the operation of the invention but rather define the environment of the embodiment described in the following. It will be understood by the skilled person that modifications to this environment can be made, e.g. the transmission may also be a broadcast transmission.

In one embodiment the mechanism encompasses four phases: i) estimation: every node assesses the channel state between itself and other terminals, ii) data rate selection, iii) selection of cluster heads: nodes perform a self-selection algorithm to select the leaders of relay clusters, and iv) multicast relay operation: opportunistic selection of relay nodes in clusters. In dynamic environments, especially in presence of mobility, all phases should be periodically executed. Each of the four phases will be described in more detail below.

However, it will be understood by the skilled person that if the clusters of relay nodes are predefined by an administrator of the network some of the phases, such as e.g the cluster head selection, are not required and the embodiment may then consist only of the relay operation (phase iv)

### Estimation Phase

During the estimation phase nodes are set to a promiscuous mode and overhear the uplink channel when other nodes are transmitting either data packets or *probe packets* to the base station Thus, nodes can gather channel state information between themselves and other terminals, e g. the Received Signal Strength Indicator (RSSI). At the end of this phase every node has a list containing the RSSI per node of all nodes it can hear. The duration of the estimation phase can be set by the network administrator according to the network topology and traffic conditions.

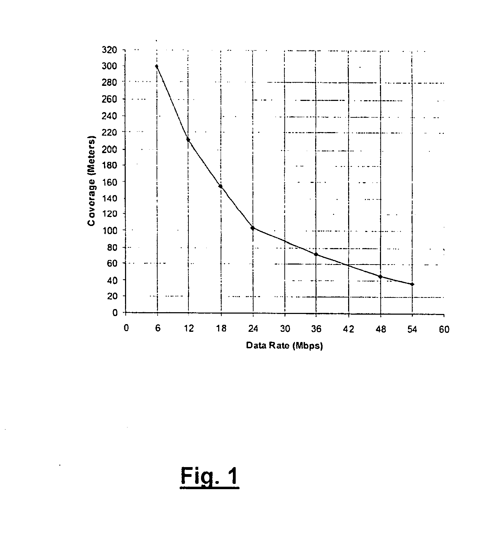

Data Rate Selection Once nodes have gathered enough information about the channel state of other nodes, they go into the second phase, which is the selection of the data rate. In principle the relay clusters must use exactly the same data rate previously used by the AP for the transmission of the multicast packets. Thus, first of all, the AP must decide the proper data rate to transmit the multicast packets according to e.g. coverage vs. data rate characteristic curves like the one shown in figure 1 (see e.g. . Romano, "The Range vs. Rate Dilemma of WLANs", April 2004, CommsDesign, http://www.commsdesign.com) for a particular 802.11g outdoor deployment. This curve can be obtained via on-site measurements. The selection of relay clusters has to be carefully performed if one wants to avoid superposition of delayed signals on the receiver side that makes it impossible to decode the packet This process is done in the next phase.

### Forming the Relay Clusters

The main goal of forming the clusters in one embodiment is to create groups of nodes close to each other which can operate as virtual relay APs. Furthermore, according to one embodiment the clusters are supposed to be far enough from each other so as to avoid a level of multi-user interference on the receiver side that makes it impossible to decode the superposed signals.

In one embodiment the selection of relay clusters is done in a completely distributed way. During multicast transmissions sets of node clusters relay the multicast packets transmitted by the AP in a set of consecutive relay transmissions. In each of these relay phases, the relay transmission starts a predetermined period, preferably a short period - e.g. a period SIFS in 802.11 case - after the multicast packet reception and using exactly the same PHY rate of the previous relay phase

In the following the cluster formation process according to one embodiment will be described in more detail.

At first the clusters of the first relay phase are formed. In this embodiment the origin of the signal (the 0-th relay phase) is an access point or a base station. The clusters of the first relay phase perform forwarding of the signal received from the base station, the clusters of the second relay phase forward the signal received during the first relay phase from the clusters belonging to the first relay phase, and so forth.

For the selection of the nodes of a cluster, according to one embodiment at first a cluster head is selected randomly. To limit the number of possible cluster heads and to ensure that they are close enough to the preceding relay stage, only those nodes may be regarded as candidates for the cluster head which receive a signal from the preceding relay stage or from the access point which is the origin of the signal to be forwarded at a strength beyond a certain threshold. Among the resulting candidates the cluster head may be randomly selected. Once it has been selected, the further nodes of the cluster may be selected based on the criterion that they receive a signal from the cluster head at a strength beyond a certain threshold.

A next cluster head may again be randomly selected, where as a further criterion there may be used that only such nodes can act as candidates for the cluster head which receive from the already existing clusters a signal below a certain threshold. This ensures a minimum distance between the clusters and avoids negative interference between the clusters.

In this manner the cluster heads and their corresponding nodes may be selected until all clusters of the first relay phase have been formed.

The clusters of the second relay phase may be formed analogously.

The cluster formation according to one embodiment will be described now in still somewhat more detail.

The maximum number of clusters formed during the first phase (the maximum number of clusters for the first relay phase) is decided by the AP and denoted *N_1.* The parameter *N*_*1* is either previously set in every node or informed by the AP through a beacon. All nodes which receive packets from the AP with RSSI greater than a predetermined value *R_AP_1* locally compute a uniformly distributed probability *p* in order to contend for becoming a cluster head. The nodes that pass this probabilistic filter (p <= threshold) contend to grab the channel in order to send a message which reads "I am the first relay-cluster head and there is a maximum of (N_1 - 1) remaining cluster heads in Phase 1". Immediately thereafter, the AP broadcasts a special acknowledgment packet containing the MAC address of the first cluster head, announcing that a first cluster-head has been chosen and there is a maximum of N_1-1 remaining cluster heads for the first-phase relay transmissions. This acknowledgment should be transmitted at the lowest possible PHY rate, e.g. 6 Mbps in 802.11g so that all mobile stations in the network are able to decode it.

After the first cluster head has been chosen nodes that meet the condition given below select themselves as members of the first cluster:
*To receive packets from the first cluster head with RSSI greater than RSSI_cluster - the MAC address or identity of the first cluster head is already known to all nodes*

Once the members of the first cluster have been selected, a given time after the cluster-head announcement ACK, e.g. SIFS in 802.11, all of them transmit simultaneously a given number of probe packets which are to be heard by all other nodes in the network.

For the selection of the second cluster head, the same basic procedure is repeated all nodes that receive the message from the AP with RSSI larger than *R_AP_1* (which ensures a maximum distance from the AP) and the simultaneous transmissions by the first cluster with RSSI smaller than *R_C1* (which ensures a minimum distance from already existing clusters) locally compute a uniformly distributed probability p in order to contend for grabbing the channel and becoming the second cluster head Nodes that pass the first RSSI constraints as well as the probabilistic filter contend to become the second cluster head The second cluster head sends at the minimum PHY rate a packet saying "I am the second cluster head, and there are at most (N_1 - 2 ) cluster heads remaining in Phase 1". The AP acknowledges this message broadcasting the MAC address of the second cluster head. Once the second cluster head has been selected, the other members of the second cluster select themselves in exactly the same way as the first cluster's according to the following condition:

*To receive packets from the second cluster head with RSSI greater than RSSI_cluster - the MAC address or identity of the second cluster head is already known to all nodes*

After all members of the second cluster have been selected, a fixed time after the reception of the second cluster head's announcement ACK all nodes transmit simultaneously a number of probe packets that are to be heard by all other nodes in the network.

The third cluster head must hear the AP with RSSI larger than R_AP and at the same time the transmissions by clusters 1 and 2 with RSSI smaller than *R_C1*, and so forth. The whole procedure according to one embodiment is repeated until all N_1 clusters of Phase 1 have been selected or until a period longer than SIFS elapses between the simultaneous transmissions of the *n_th* cluster and the message from the cluster head *n*+*1_th.* After the clusters of the first relay phase are selected, the AP sends a message announcing the start of the second-phase cluster selection with a maximum of N_2 cluster heads - according to one embodiment N_2 is larger than N_1.

The clusters of the second relay phase are selected in a similar way to the first phase. However, the threshold levels of RSSI are in this case *R_AP_2* and *R_C2* for the AP and other clusters' transmissions, respectively. According to one embodiment the strength *R_AP_2* is the strength of a signal received from the access point or the base station (the zero-th relay phase), according to a further embodiment it is the strength of a signal received from one or more nodes from the preceding relay phase As an additional condition, there may be used not only the condition that *R_AP_2* lies beyond a certain threshold but also the condition that additionally it lies below a certain threshold in order to make sure that the relay clusters of the second phase are further away from the access point than the relay clusters of the first phase.

For the third phase or any further phase (if necessary) the procedure for selecting the cluster nodes may be done in exactly the same way.

Once all clusters have been formed the system can go into the multicast relay operation phase.

### Multicast relay operation

In the previous phase the members of every cluster for all relay phases have been selected. In this phase, the cluster nodes relay the multicast packets they receive from the AP in several relay phases. Thus, the cluster nodes of first relay-phase (the ones lying at the first "circle" around the base station) transmit simultaneously at the same data rate chosen by the AP. A fixed amount of time after the first relay-phase, e.g. according to one embodiment a period SIFS in 802.11 case, all cluster nodes of the second relay-phase (the ones at the second "circle" around the base station) transmit simultaneously, and so forth.

The synchronization can e.g. according to one embodiment be achieved by triggering the relay transmission by letting lapse a certain predefined time (which can be very small, almost zero) after receipt of a unit (a frame or a packet) of the received signal. In this manner the completion of the receipt of the signal (or a unit of it) can trigger the relay transmission. This mechanism can be used at all relay stages for triggering the next relay transmission.

By the collective relay transmission the coverage can be widened and the data rate can be increased

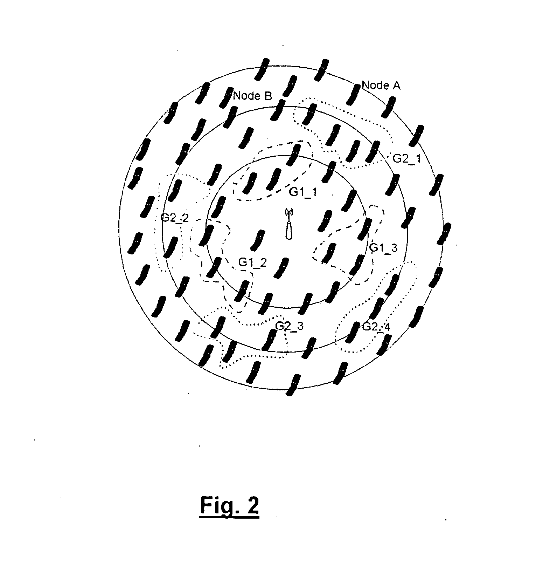

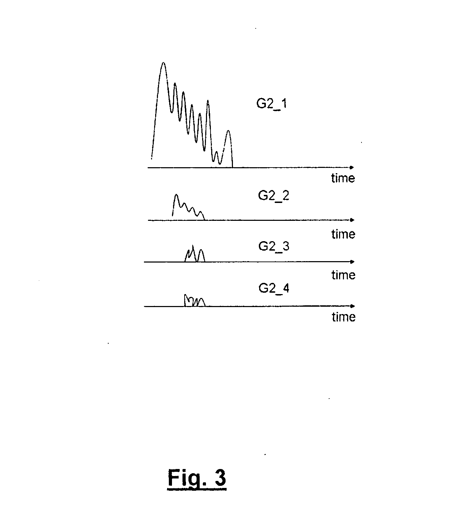

For the sake of clarification, one may consider Node A in the example depicted in Figure 2 Let us suppose that the AP has selected a transmission rate of 18 Mbps based on a characteristic curve like the one shown in Figure 1. Node A is very far from the AP but it is able to hear the beacon with the announcement of the upcoming multicast period since it is transmitted at 6 Mbps. Node A knows that multicast traffic is coming but it can not decode neither the packet transmitted at 18 Mbps by the AP nor the first-phase relay transmissions at 18 Mbps because of their low SNR. Node A is close to the cluster G2_1 and thus in the second phase of relay transmissions it receives a very strong signal from the simultaneous transmissions of nodes in cluster G2_1, and much weaker and delayed one from the clusters G2_2, G2_3 and G2_4 as shown in Figure 3 Thus, Node A is able to decode the multicast packet from the transmissions by G2_1.

If a node is in the transmission area of two or more different clusters of the same relay phase which do not hear to each other, with high probability it will not be able to decode the superposed signals coming from both clusters. In the example shown in Figure 2, node B is in such position between G2_1 and G2_2. To deal with this problem a small artificial delay Δ(e.g. as small as few or several microseconds) along with a signal estimation (equalizer training) phase can be introduced between two relay transmissions in the same relay phase.

However, even in its difficult position node B of figure 2 may have been able to decode the multicast packet beforehand, only by chance, upon the AP- or first-phase relay transmissions so the second relay phase had already become irrelevant to it. This opportunistic reception of previous relay phases increases the chances of successfully decoding a packet for nodes located far from the AP and is another advantage of the several relay phases of the mechanism according to one embodiment.

Another solution to avoid the collision of multiple clusters could be to use directional antennas in the receiver terminals, and thus give higher gains in the direction of certain clusters instead of other ones

### Performance Evaluation

There will now be explained the gains offered the following two aspects, the formation of "groups" and the "simultaneous" multicast or broadcast transmissions. Before describing the gains separately for "simultaneous transmissions and "group forming" there is firstly given a very simple example.

### General example

One may consider the typical data rate vs. distance curve for 802.11g in outdoor deployment as shown in Figure 1 and assume a network topology as the one shown below, where the AP is transmitting broadcast packets. In the conventional 802.11 multicast system the AP must transmit at the lowest possible data rate (6 Mbps) to reach all stations, including stations G and H that are located 300 m from the AP.

### Conventional Multicast System:

| | | | |
|---|---|---|---|
| | A | D | |
| (AP) | B | E | G |
| | C | F | H |
| ←----- 300 m -----→ | | | |
| | 6 | Mbps | |

One may suppose that the transmission power of a station is one third of AP's. Using the proposed relay-clusters with simultaneous transmissions the AP could instead transmit at 18 Mbps with 160 m coverage, then nodes ABC could relay the packet at 18 Mbps with 160 m coverage and finally nodes DEF could relay again the packet at 18 Mbps with 160 m coverage. The result is, as shown in the figure below, an end-to-end data rate of 6 Mbps but with coverage of 480 m, which represents a coverage increase of more than 50% with respect to the original system. But that is not all, since the multiple relay transmissions also offer time and space diversity to a large number of nodes in the network.

### Multicast System of an embodiment of the invention:

| | | | | | |
|---|---|---|---|---|---|
| | A | D | K | L | |
| (AP) | B | E | G | M | N |
| | C | F | H | | O |
| ←-----480 m -----→ | | | | | |
| | 6 | Mbps | | | |

Next, one may suppose that the 300 m coverage of the example network above is fixed. According to the characteristic curve in Figure 1, in this case the AP could transmit at 24 Mbps with 105 m coverage, then cluster {A B C} relays at 24 Mbps with 105 m coverage and finally cluster {D E F} relays at 24 Mbps with 105 m coverage. Thus as shown in the figure below the end-to-end data rate becomes 8 Mbps with 315 m coverage, which represents a data rate gain of 33% and a slight coverage gain with respect to the conventional multicast system.

### Multicast System of an embodiment of the invention:

| | | | |
|---|---|---|---|
| | A | D | |
| (AP) | B | E | G |
| | C | F | H |
| ←----- 315 m -----→ | | | |
| | 8 | Mbps | |

For the advantages stated above to become a reality, clusters {A B C} and {D E F} should be formed carefully taking into account their transmission power, mutual distances and distances to all other nodes in the network. In the foregoing description there were proposed mechanisms to deal with this problem in order to form clusters in an efficient way.

Next there will be described the advantages separately, using simplified scenarios, for "simultaneous" transmissions, and for "group" transmission.

### Gains of "simultaneous" transmissions

### One may consider the following topology:

| | |
|---|---|
| (AP) | |
| A | B |
| C | D |

(AP): Access Point
A, B: two separate nodes.

In the classical multicast scenario, where the AP streams the data to be relayed by A and B (to cover their "regions" represented by C and D respectively), 3 time slots are needed: AP transmits, then A transmits, then B transmits.

By allowing A and B to transmit "simultaneously", one gets the multicast done in two slots (vs. 3, i.e. gain=3/2) For this to be performed successfully, one needs some constraints on the distances between A and B, which will be referred to as "set of constraints 1".

### Gains of "group" transmissions

One may consider the following scenario:
(AP) ABC D E F
(AP) Access Point
A, B, C, D, E, F: 6 separate nodes

The AP streams broadcast data, intending to cover all the area.
A Multihop vs. single-hop
   ----- When the AP tries to reach everyone in a single hop, with transmission power limitations, it has to use low data rates in order to cover the long distances with low error rates Using multihop higher end-to-end rates can be achieved, though needing at least 2 timeslots instead of one.
B. Cluster-head alone or whole cluster should relay?
   ---- One may assume B is the clusterhead of ABC. If no group-retransmissions are used, B relays the data from the AP, then (e g.) D relays it again to finally reach F in 3 hops.

The other possibility would be to form a "relaying group", ABC, with a combined power enough to reach F in a single transmission.

One may notice that in the previous paragraph there was favored increasing the number of hops, and now there is discussed the reduction of the number of hops. However, this is because the optimal end-to-end data-rate is somewhere between single-hop and too many hops
2 hops instead of three hops, leads to a gain in data rate of 3/2.

To form such relaying "groups", while being decodable at the destination (just like multipath radio propagation), may be regarded as "second set of constraints".

### Discussion

The gain (3/2) of group relaying shown in the example before corresponds to a linear topology. In a 2D topology, it is combined with the gain (3/2) of simultaneous (single-node) relaying described before.

### A generic example may look as follows:

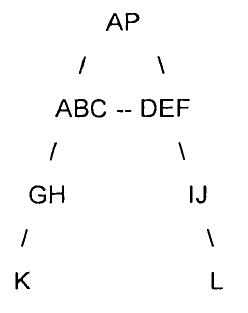

If one considers only a single node (cluster-head) relaying, without simultaneous transmissions, we will end up having 5 transmissions to reach everyone:
AP transmits, then B, then E, then G (after B), then I (after E).

If we use simultaneous group relaying, we can reach everyone using just 2 transmissions (timeslots):
AP transmits, then ABC and DEF (simultaneously)

Thus, the gain here is 5/2. While this is an optimistic scenario, however, one will never get a negative gain if the groups are formed properly, whatever the network topology is.

Therefore, the constraints to build "simultaneous" relaying "groups" are the combination of both sets of constraints. Likewise the gain from these simultaneous relay transmissions is the result of both scenarios described before. It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention An apparatus implementing an embodiment of the invention may e.g. comprise computing device or a mobile phone or any mobile device acting as a node or element in a wireless network and being suitably programmed such that it is able to carry out method as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

## Claims

1. A method for selecting the member nodes of a relay cluster for forwarding data in a wireless network, wherein said network comprises one or more said relay clusters, each relay cluster being formed by a group of nodes of said wireless network, and wherein the data received by the nodes of one said relay clusters of said wireless network is forwarded in a synchronized manner by simultaneously forwarding the received data after it has been received by said group of nodes so that the nodes of a relay cluster collectively and simultaneously act as relay nodes for received data, said method being **characterized by**:
selecting a cluster head for said relay cluster;
selecting those nodes as member nodes of said relay cluster for which the signal strength of a signal received from said cluster head lies beyond a certain threshold;
selecting a next cluster head for a further relay cluster, wherein only such nodes are considered as a candidate for said next cluster head for which the signal strength of a signal received from already existing other clusters lies below a certain threshold; and after said next cluster head has been selected,
selecting those nodes as member nodes of said relay cluster for which the signal strength of a signal received from said next cluster head lies beyond a certain threshold;
wherein said forwarding of data is performed in multiple consecutive relay phases, each relay phase having assigned a corresponding group of one or more relay clusters which forwards the data which it has received in during the preceding relay phase from the relay clusters assigned to the preceding relay phase and
wherein multiple groups of clusters are generated, each group of clusters belonging to a corresponding relay phase within which all clusters belonging to said relay phase transmit simultaneously to forward the signal, wherein
the members of the clusters of one group of clusters are selected based on the following conditions:
their cluster head receives a signal from one or more up to all nodes of the preceding relay phase or from the zero-th relay phase at a strength beyond a certain threshold; and
the cluster heads of the different clusters have a minimum distance from each other which is ensured by selecting them such that the signal strength of a signal which they receive from other existing clusters lies below a certain threshold; and
the member nodes of a cluster receive a signal from their corresponding cluster head at a signal strength beyond a certain threshold.

2. The method of claim 1, further comprising:
introducing an artificial delay between two simultaneous transmissions of the same relay phase.

3. An apparatus for selecting the member nodes of a relay cluster for forwarding data in a wireless network, wherein said network comprises one or more said relay clusters, each relay cluster being formed by a group of nodes of said wireless network, and wherein the data received by the nodes of one said relay clusters of said wireless network is forwarded in a synchronized manner by simultaneously forwarding the received data after it has been received by said group of nodes so that the nodes of a relay cluster collectively and simultaneously act as relay nodes for received data, said apparatus being **characterized by**:a module for selecting a cluster head for said relay cluster;
a module for selecting those nodes as member nodes of said relay cluster for which the signal strength of a signal received from said cluster head lies beyond a certain threshold;
a module for selecting a next cluster head for said further relay cluster, wherein only such nodes are considered as a candidate for said cluster head for which the signal strength of a signal received from already existing other clusters lies below a certain threshold; and
a module for, after said next cluster head has been selected, selecting those nodes as member nodes of said relay cluster for which the signal strength of a signal received from said cluster head lies beyond a certain threshold;
wherein said forwarding of data is performed in multiple consecutive relay phases, each relay phase having assigned a corresponding group of one or more relay clusters which forwards the data which it has received in during the preceding relay phase from the relay clusters assigned to the preceding relay phase; and
wherein said apparatus is adapted such that multiple groups of clusters are generated, each group of clusters belonging to a corresponding relay phase within which all clusters belonging to said relay phase transmit simultaneously to forward the signal, wherein
the members of the clusters of one group of clusters are selected based on the following conditions:
their cluster head receives a signal from one or more up to all nodes of the preceding relay phase or from the zero-th relay phase at a strength beyond a certain threshold; and
the cluster heads of the different clusters have a minimum distance from each other which is ensured by selecting them such that the signal strength of a signal which they receive from other existing clusters lies below a certain threshold; and
the member nodes of a cluster receive a signal from their corresponding cluster head at a signal strength beyond a certain threshold.

4. An apparatus according to claim 3, further comprising:
a module for carrying out a method according to one of claims 1 to 2.

5. A node in a wireless network, said node comprising:
one or more modules to enable said node to act as a relay node in a network in which data is forwarded according to a method of one of claims 1 to 2.

6. A computer program product comprising computer program code which when being executed by a computer enables said computer to carry out a method according to one of claims 1 to 2.

## Patentansprüche

1. Ein Verfahren zum Auswählen der Mitgliedsknoten eines Relais-Clusters zum Weiterleiten von Daten in einem drahtlosen Netzwerk, wobei das Netzwerk einen oder mehrere der Relais-Cluster aufweist, wobei jeder Relais-Cluster gebildet wird durch eine Gruppe von Knoten des drahtlosen Netzwerks, und wobei die Daten, die durch die Knoten von einem der Relais-Cluster des drahtlosen Netzwerks empfangen werden, auf synchronisierte Weise weitergeleitet werden durch simultanes Weiterleiten der empfangenen Daten, nachdem sie von der Gruppe von Knoten empfangen wurden, so dass die Knoten eines Relais-Clusters kollektiv und simultan als Relais-Knoten für empfangene Daten agieren, wobei das Verfahren **gekennzeichnet ist durch**:
Auswählen eines Cluster-Kopfes für den Relais-Cluster;
Auswählen derjenigen Knoten als Mitgliedsknoten des Relais-Clusters, für welche die Signalstärke eines Signals, das von dem Cluster-Kopf empfangen wird, jenseits eines bestimmten Schwellwerts liegt;
Auswählen eines nächsten Cluster-Kopfes für einen weiteren Relais-Cluster, wobei nur solche Knoten berücksichtigt werden als Kandidaten für den nächsten Cluster-Kopf, für welche die Signalstärke eines Signals, das von bereits existierenden anderen Clustern empfangen wird, unterhalb eines bestimmten Schwellwerts liegt; und nachdem der nächste Cluster-Kopf ausgewählt wurde,
Auswählen derjenigen Knoten als Mitgliedsknoten des Relais-Clusters, für welche die Signalstärke eines Signals, das von dem nächsten Cluster-Kopf empfangen wird, jenseits eines bestimmten Schwellwerts liegt;
wobei das Weiterleiten von Daten durchgeführt wird in multiplen konsekutiven Relais-Phasen, wobei jeder Relais-Phase eine entsprechende Gruppe von einem oder mehreren Relais-Clustern zugeordnet ist, welche die Daten, die sie während der vorhergehenden Relais-Phase von den Relais-Clustern, die der vorhergehenden Relais-Phase zugeordnet sind, empfangen haben, weiterleitet, und
wobei multiple Gruppen von Clustern erzeugt werden, wobei jede Gruppe von Clustern zu einer entsprechenden Relais-Phase gehört, innerhalb der alle Cluster, die zur selben Relaisphase gehören, simultan zur Weiterleitung des Signals übertragen, wobei
die Mitglieder der Cluster einer Gruppe von Clustern ausgewählt werden basierend auf den folgenden Bedingunger:
ihre Cluster-Köpfe empfangen ein Signal von einem oder mehreren bis zu allen Knoten der vorhergehenden Relais-Phase oder von der 0-ten Relais-Phase mit einer Stärke jenseits eines bestimmten Schwellwerts; und
die Cluster-Köpfe der unterschiedlichen Cluster haben eine minimalen Abstand voneinander, welcher sichergestellt wird **dadurch**, dass sie so ausgewählt werden, dass die Signalstärke eines Signals, welches sie von anderen existierenden Clustern empfangen, unterhal eines bestimmten Schwellwerts liegt; und
die Mitgliedsknoten eines Clusters empfangen ein Signal von ihrem entsprechenden Clusterkopf mit zumindest einer Signalstärke jenseits eines bestimmten Schwellwerts.

2. Das Verfahren nach Anspruch 1, ferner aufweisend:
Einführen einer artifiziellen Verzögerung zwischen zwei simultanen Übertragungen derselben Relais-Phase.

3. Eine Vorrichtung zum Auswählen der Mitgliedsknoten eines Relais-Clusters zum Weiterleiten von Daten in einem drahtlosen Netzwerk, wobei das Netzwerk einen oder mehrere der Relais-Cluster aufweist, wobei jeder Relais-Cluster gebildet wird durch eine Gruppe von Knoten des drahtlosen Netzwerks, und wobei die Daten, die durch die Knoten von einem der Relais-Cluster des drahtlosen Netzwerks empfangen werden, auf synchronisierte Weise weitergeleitet werden durch simultanes Weiterleiten
der empfangenen Daten, nachdem sie von der Gruppe von Knoten empfangen wurden, so dass die Knoten eines Relais-Clusters kollektiv und simultan als Relais-Knoten für empfangene Daten agieren, wobei die Vorrichtung **gekennzeichnet ist durch**:
ein Modul zum Auswählen eines Cluster-Kopfes für den Relais-Cluster;
ein Modul zum Auswählen derjenigen Knoten als Mitgliedsknoten des Relais-Clusters, für welche die Signalstärke eines Signals, das von dem Cluster-Kopf empfangen wird, jenseits eines bestimmten Schwellwerts liegt;
ein Modul zum Auswählen eines nächsten Cluster-Kopfes für einen weiteren Relais-Cluster, wobei nur solche Knoten berücksichtigt werden als Kandidaten für den nächsten Cluster-Kopf, für welche die Signalstärke eines Signals, das von bereits existierenden anderen Clustern empfangen wird, unterhalb eines bestimmten Schwellwerts liegt; und
ein Modul zum, nachdem der nächste Cluster-Kopf ausgewählt wurde, Auswählen derjenigen Knoten als Mitgliedsknoten des Relais-Clusters, für welche die Signalstärke eines Signals, das von dem nächsten Cluster-Kopf empfangen wird, jenseits eines bestimmten Schwellwerts liegt;
wobei das Weiterleiten von Daten durchgeführt wird in multiplen konsekutiven Relais-Phasen, wobei jeder Relais-Phase eine entsprechende Gruppe von einem oder mehreren Relais-Clustern zugeordnet ist, welche die Daten, die sie während der vorhergehenden Relais-Phase von den Relais-Clustern, die der vorhergehenden Relais-Phase zugeordnet sind, empfangen haben, weiterleitet, und
wobei die Vorrichtung so angepasst ist, dass multiple Gruppen von Clustern erzeugt werden, wobei jede Gruppe von Clustern zu einer entsprechenden Relais-Phase gehört, innerhalb der alle Cluster, die zur selben Relaisphase gehören, simultan zur Weiterleitung des Signals übertragen, wobei die Mitglieder der Cluster einer Gruppe von Clustern ausgewählt werden basierend auf den folgenden Bedingungen:
ihre Cluster-Köpfe empfangen ein Signal von einem oder mehreren bis zu allen Knoten der vorhergehenden Relais-Phase oder von der 0-ten Relais-Phase mit einer Stärke jenseits eines bestimmten Schwellwerts; und
die Cluster-Köpfe der unterschiedlichen Cluster haben eine minimalen Abstand voneinander, welcher sichergestellt wird **dadurch**, dass sie so ausgewählt werden, dass die Signalstärke eines Signals, welches sie von anderen existierenden Clustern empfangen, unterhal eines bestimmten Schwellwerts liegt; und
die Mitgliedsknoten eines Clusters empfangen ein Signal von ihrem entsprechenden Clusterkopf mit zumindest einer Signalstärke jenseits eines bestimmten Schwellwerts.

4. Eine Vorrichtung nach Anspruch 3, ferner aufweisend:
ein Modul zum Ausführen eines Verfahrens gemäß einem der Ansprüche 1 bis 2.

5. Ein Knoten in einem drahtlosen Netzwerk, wobei der Knoten aufweist:
ein oder mehrere Module, um den Knoten in die Lage zu versetzen, als ein Relais-Knoten in einem Netzwerk zu agieren, in dem Daten nach einem Verfahren gemäß einem der Ansprüche 1 bis 2 weitergeleitet werden.

6. Ein Computerprogramm-Produkt aufweisend Computerprogramm-Code, der, wenn er durch einen Computer ausgeführt wird, den Computer in die Lage versetzt, ein Verfahren gemäß einem der Ansprüche 1 bis 2 auszuführen.

## Revendications

1. Procédé destiné à sélectionner les noeuds membres d'une grappe de relais en vue d'acheminer des données dans un réseau sans fil, dans lequel ledit réseau comprend une ou plusieurs desdites grappes de relais, chaque grappe de relais étant formée par un groupe de noeuds dudit réseau sans fil, et dans lequel les données reçues par les noeuds de l'une desdites grappes de relais dudit réseau sans fil sont acheminées de manière synchronisée en acheminant simultanément les données reçues après qu'elles aient été reçues par ledit groupe de noeuds, de sorte que les noeuds d'une grappe de relais agissent collectivement et simultanément en qualité de noeuds de relai pour les données reçues, ledit procédé étant **caractérisé par**:
la sélection d'une tête de grappe pour ladite grappe de relais ;
la sélection de noeuds en tant que noeuds membres de ladite grappe de relais pour lesquels la force de signal d'un signal reçu à partir de ladite tête de grappe se situe au-delà d'un certain seuil ;
la sélection d'une tête de grappe suivante pour une grappe de relais supplémentaire, dans laquelle seuls sont considérés en qualité de candidats pour ladite tête de grappe suivante les noeuds pour lesquels la force de signal d'un signal reçu en provenance d'autres grappes déjà existantes est inférieure à un certain seuil, et après que ladite tête de grappe suivante a été sélectionnée ;
la sélection en qualité de noeuds membres de ladite grappe de relais des noeuds pour lesquels la force de signal d'un signal reçu à partir de ladite tête de grappe suivante se situe au-delà d'un certain seuil ;
dans lequel ledit acheminement de données est mis en oeuvre en de multiples phases de relai consécutives,
chaque phase de relai se voyant affecter un groupe correspondant d'une ou plusieurs grappes de relais qui transmet les données qu'il a reçues au cours de la phase de relai précédente à partir des grappes de relais affectées à la phase de relai précédente ; et
dans lequel de multiples groupes de grappes sont générés, chaque groupe de grappes appartenant à une phase de relai correspondante dans laquelle toutes les grappes appartenant à ladite phase de relai transmettent simultanément en vue d'acheminer le signal, dans lequel
les membres des grappes d'un groupe de grappes sont sélectionnés sur la base des conditions suivantes :
leur tête de grappe reçoit un signal en provenance d'un ou de plusieurs, voire de la totalité des noeuds de la phase de relai précédente, ou de la phase de relai nulle à une force au-delà d'un certain seuil ; et
les têtes de grappes des différentes grappes sont à une distance minimale les unes des autres, ce qui est garanti en les sélectionnant de sorte que la force de signal d'un signal qu'elles reçoivent à partir d'autres grappes existantes est inférieure à un certain seuil ;
et
les noeuds membres d'une grappe reçoivent un signal en provenance de leur tête de grappe correspondante avec une force de signal au-delà d'un certain seuil.

2. Procédé selon la revendication 1, comprenant en outre
l'introduction d'un retard artificiel entre deux transmissions simultanées de la même phase de relai.

3. Dispositif destiné à sélectionner les noeuds membres d'une grappe de relais en vue d'acheminer des données dans un réseau sans fil, dans lequel ledit réseau comprend une ou plusieurs desdites grappes de relais, chaque grappe de relais étant formée par un groupe de noeuds dudit réseau sans fil, et dans lequel les données reçues par les noeuds de l'une desdites grappes de relais dudit réseau sans fil sont acheminées de manière synchronisée en acheminant simultanément les données reçues après qu'elles aient été reçues par ledit groupe de noeuds, de sorte que les noeuds d'une grappe de relais agissent collectivement et simultanément en qualité de noeuds de relai pour les données reçues, ledit dispositif étant **caractérisé par** :
un module permettant de sélectionner une tête de grappe pour ladite grappe de relais ;
un module permettant de sélectionner des noeuds en tant que noeuds membres de ladite grappe de relais pour lesquels la force de signal d'un signal reçu à partir de ladite tête de grappe se situe au-delà d'un certain seuil ;
un module permettant de sélectionner une tête de grappe suivante pour ladite grappe de relais supplémentaire,
dans laquelle seuls sont considérés en qualité de candidats pour ladite tête de grappe suivante les noeuds pour lesquels la force de signal d'un signal reçu en provenance d'autres grappes déjà existantes est inférieure à un certain seuil ; et
un module permettant de, après que ladite tête de grappe suivante a été sélectionnée, sélectionner en qualité de noeuds membres de ladite grappe de relais les noeuds pour lesquels la force de signal d'un signal reçu à partir de ladite tête de grappe suivante se situe au-delà d'un certain seuil ;
dans lequel ledit acheminement de données est mis en oeuvre en de multiples phases de relai consécutives,
chaque phase de relai se voyant affecter un groupe correspondant d'une ou plusieurs grappes de relais qui transmet les données qu'il a reçues au cours de la phase de relai précédente à partir des grappes de relais affectées à la phase de relai précédente ; et
dans lequel ledit dispositif est adapté de sorte que de multiples groupes de grappes sont générés, chaque groupe de grappes appartenant à une phase de relai correspondante dans laquelle toutes les grappes appartenant à ladite phase de relai transmettent simultanément en vue d'acheminer le signal, dans lequel les membres des grappes d'un groupe de grappes sont sélectionnés sur la base des conditions suivantes
leur tête de grappe reçoit un signal en provenance d'un ou de plusieurs, voire de la totalité des noeuds de la phase de relai précédente, ou de la phase de relai nulle à une force au-delà d'un certain seuil ; et
les têtes de grappes des différentes grappes sont à une distance minimale les unes des autres, ce qui est garanti en les sélectionnait de sorte que la force de signal d'un signal qu'elles reçoivent à partir d'autres grappes existantes est inférieure à un certain seuil ; et
les noeuds membres d'une grappe reçoivent un signal en provenance de leur tête de grappe correspondante avec une force de signal au-delà d'un certain seuil.

4. Dispositif selon la revendication 3, comprenant en outre :
un module permettant de mettre en oeuvre un procédé selon l'une quelconque des revendications 1 à 2.

5. Noeud dans un réseau sans fil, ledit noeud comprenant :
un ou plusieurs modules pour permettre audit noeud d'agir en qualité de noeud de relai dans un réseau dans lequel des données sont acheminées conformément à un procédé selon l'une quelconque des revendications 1 à 2.

6. Produit-programme informatique comprenant un code de programme informatique qui, lorsqu'il est exécuté par un ordinateur, permet audit ordinateur de mettre en oeuvre un procédé selon l'une quelconque des revendications 1 à 2.
